# DEMANDE DE BREVET EUROPEEN

(11) **EP 1 826 070 A1**
(43) Date de publication de la demande: **29.08.2007**
(21) Numéro de dépôt: 07300709.8
(22) Date de dépôt: 09.01.2007
(51) Int. Cl.: B60R 21/205

(54) **Agencement de planche de bord avec dispositif de protection à coussin d'air gonflable pour un véhicule automobile**

(30) Priorité: 28.02.2006 FR 0650699
(71) Demandeur: RENAULT S.A.S., 92100 Boulogne Billancourt (FR)
(72) Inventeur: Schmidt, Christian, 28210 Nogent Le Roi (FR)

(57) **Abrégé**

Un agencement de planche de bord pour un véhicule automobile, situé du côté du passager avant, monté sur une structure d'une caisse (12) du véhicule, comprend une paroi extérieure (2), orientée vers l'habitacle, et un dispositif de protection pour le passager avant à coussin d'air gonflable (4), disposé sous la paroi extérieure (2).

Le dispositif de protection pour le passager avant à coussin d'air gonflable (4) est monté sur un dispositif de climatisation (9) fixé sur la structure de la caisse (12) du véhicule.

## Description

### DOMAINE TECHNIQUE

La présente invention concerne un agencement de planche de bord situé du côté du passager avant pour un véhicule automobile. L'invention se rapporte également plus spécifiquement à un tel agencement incorporant un coussin d'air gonflable.

Dans les véhicules automobiles actuels, les dispositifs de protection à coussin d'air gonflable, également connus sous le nom d'« airbag », sont de plus en plus nombreux. Ils permettent d'assurer la sécurité du conducteur et des passagers, en se déployant dans le volume de l'habitacle. Pour le passager avant, l'un des dispositifs de protection à coussin d'air se gonfle vers l'arrière en direction de la tête, du buste et des épaules du passager avant. Ce dispositif de protection est situé à l'intérieur de la planche de bord sous sa paroi extérieure.

La paroi extérieure comprend une trappe ou de moyens permettant à celle-ci de s'ouvrir pour la sortie du coussin d'air. Lorsque survient un accident de la circulation, le coussin d'air se gonfle instantanément à la suite de la collision importante intervenant sur la structure du véhicule. De manière simplifiée, des capteurs de choc adéquats envoient une impulsion électrique vers une cartouche de gaz, ce qui enclenche le gonflage du coussin. Pour résister à l'irruption violente du coussin dans l'habitacle, le dispositif de protection doit donc être solidement arrimé à la structure de la caisse du véhicule. Les efforts de déclenchement du dispositif de protection, de l'ordre de 1,0 à 1,2 tonnes, doivent être repris par une structure suffisamment résistante.

### ÉTAT DE LA TECHNIQUE ANTÉRIEURE

Le document US- 2005/ 0.082.800 divulgue un agencement de planche de bord pour un véhicule automobile comprenant une paroi extérieure, un dispositif de protection pour le passager avant à coussin d'air gonflable et une plaque sous la paroi. Le dispositif de protection est fixé à l'arrière de la plaque sous la paroi.

Le document FR- 2.851.532 décrit un agencement de planche de bord pour un véhicule automobile comprenant une paroi extérieure, un dispositif de protection pour le passager avant à coussin d'air gonflable et un support. Le dispositif de protection est introduit dans le support fixé sous la paroi extérieure de la planche de bord.

Le document US- 5.588.669 montre un agencement de planche de bord pour un véhicule automobile comprenant une paroi extérieure et un dispositif de protection pour le passager avant à coussin d'air gonflable. Le dispositif de protection est fixé et prend appui sur un élément structurel interne du véhicule.

On connaît également d'après le document FR- 2.807.372 un agencement de planche de bord pour un véhicule automobile comprenant une paroi extérieure, un dispositif de protection pour le passager avant à coussin d'air gonflable et un élément structurel, se déployant sous la paroi extérieure et fixé à une traverse longitudinale arrière de la planche de bord. Le dispositif de protection est solidarisé à l'élément structurel.

Cependant, dans ces documents antérieurs, la force de déclenchement du dispositif de protection est encaissée directement par la structure interne de caisse au niveau de la planche de bord. Cette structure va se retrouver déformée et va endommager les éléments avoisinants, rendant le véhicule plus difficilement réparable après un accident. De plus, pour des véhicules de petites dimensions, le manque de place disponible sous la planche de bord et entre la boîte à gants et le compartiment moteur est difficilement compatible avec la fixation d'un dispositif de protection sur la structure de caisse du véhicule.

Dans de nombreux véhicules, le dispositif de protection à coussin d'air gonflable est éloigné de la traverse longitudinale arrière de la planche de bord, et plus précisément du passager avant, afin de respecter au mieux les préconisations d'implantation du dispositif de protection. En l'occurrence, une telle implantation permet d'éviter, lorsque le passager avant se retrouve penché vers l'avant au niveau de la planche de bord, que le coussin d'air se gonflant rencontre le visage du passager avant et, de ce fait, entraîne une blessure au niveau des cervicales.

Dans le cas où le dispositif de protection est éloigné de la traverse longitudinale arrière de la planche de bord, et en absence de tout autre moyen de fixation de ce dispositif, les calculs montrent une rotation de ce même dispositif autour de cette traverse. Une rotation de ce type engendre un mauvais fonctionnement du dispositif de protection, plus particulièrement lors de la sortie du coussin d'air.

### EXPOSÉ DE L'INVENTION

Un problème principal que se propose de résoudre l'invention consiste à mettre au point un agencement de planche de bord pour un véhicule automobile, incorporant un dispositif de protection à coussin d'air gonflable. Un deuxième problème est d'optimiser la fixation du dispositif de protection à coussin d'air gonflable. Un autre problème encore est d'obtenir une installation du dispositif de protection à coussin d'air gonflable permettant une optimisation de l'encaissement des forces de déclenchement du coussin d'air.

L'invention concerne donc un agencement de planche de bord pour un véhicule automobile, situé du côté du passager avant, monté sur une structure d'une caisse du véhicule, et comprenant :
- une paroi extérieure, orientée vers l'habitacle, et
- un dispositif de protection pour le passager avant à coussin d'air gonflable, disposé sous la paroi extérieure.

Conformément à un aspect de la présente invention, l'agencement est caractérisé en ce que le dispositif de protection pour le passager avant à coussin d'air gonflable est monté sur un dispositif de climatisation fixé sur la structure de la caisse du véhicule.

Autrement dit, en intercalant le dispositif de climatisation entre la structure de la caisse du véhicule automobile et le dispositif de protection à coussin d'air gonflable, le dispositif de climatisation va pouvoir encaisser le choc violent lié au déclenchement du coussin d'air se gonflant. De cette manière, les forces d'impact engendrées par le gonflage du coussin d'air se répercutent d'abord sur le dispositif de climatisation, puis sur la structure de la caisse. Ces forces d'impact se répartissent à la fois sur le dispositif de climatisation et sur la structure de la caisse.

Dans la description de la présente invention, l'avant est défini comme correspondant au sens d'avancement du véhicule et au conducteur regardant à travers le pare-brise avant, et l'arrière est défini comme étant le sens de marche arrière du véhicule. Les véhicules se composent d'un châssis sur lequel est posée une caisse de véhicule avec une structure de renforcement.

Le dispositif de protection à coussin d'air gonflable peut être monté sur un évaporateur du dispositif de climatisation. Le dispositif de protection à coussin d'air gonflable peut comprendre un boîtier. De manière particulièrement avantageuse, le boîtier peut prendre appui sur des nervures de structure. Ces nervures permettent de répartir les forces d'appui. Ces nervures permettent accessoirement de dissiper des calories provenant du dispositif de climatisation.

Les nervures de structure peuvent favorablement comporter une première série de nervures inférieures. Ces premières nervures peuvent être sensiblement transversales et sensiblement perpendiculaires à une surface supérieure de l'évaporateur du dispositif de climatisation. Ces premières nervures peuvent prendre appui sur la surface supérieure de cet évaporateur de ce dispositif de climatisation. De préférence, une surface inférieure du boîtier du dispositif de protection à coussin d'air gonflable peut prendre appui sur la première série de nervures inférieures. Une cartouche de gonflage du dispositif de protection à coussin d'air gonflable peut prendre appui sur la première série de nervures inférieures.

Les nervures de structure peuvent favorablement comporter une deuxième série de nervures avants. Ces deuxièmes nervures peuvent être sensiblement longitudinales et sensiblement verticales. Ces deuxièmes nervures peuvent prendre appui sur une traverse longitudinale supérieure de tablier. De préférence, une cartouche de gonflage du dispositif de protection à coussin d'air gonflable peut prendre appui sur la deuxième série de nervures avants.

Les nervures de structure peuvent favorablement comporter une troisième série de nervures arrières. Ces troisièmes nervures peuvent être sensiblement longitudinales et sensiblement verticales. Ces troisièmes nervures peuvent prendre appui sur une traverse longitudinale arrière de planche de bord. De préférence, une arête du boîtier du dispositif de protection à coussin d'air gonflable peut prendre appui sur la troisième série de nervures arrières. Une cartouche de gonflage du dispositif de protection à coussin d'air gonflable peut prendre appui sur la troisième série de nervures arrières.

### BRÈVE DESCRIPTION DES DESSINS

L'invention sera bien comprise et ses divers avantages et différentes caractéristiques ressortiront mieux lors de la description suivante, de l'exemple non limitatif de réalisation, en référence aux dessins schématiques annexés, dans lesquels :
- la Figure 1 représente une vue en perspective partielle d'un agencement de planche de bord avec un dispositif de protection à coussin d'air gonflable selon l'invention ;
- la Figure 2 représente une vue en perspective partielle écorchée de l'agencement de la Figure 1 ;

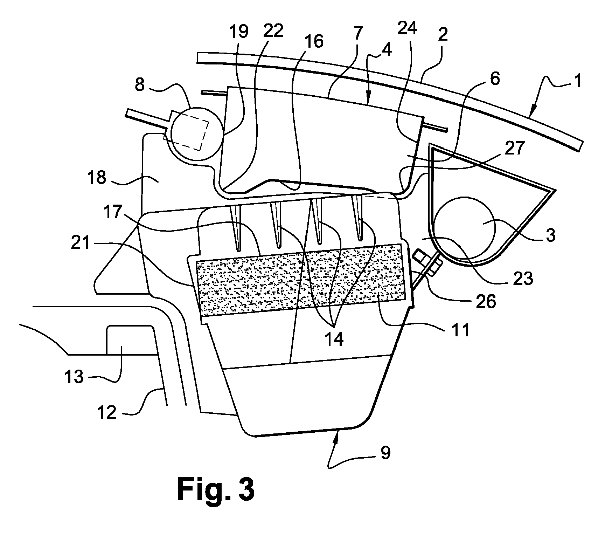

- la Figure 3 représente une vue en coupe longitudinale de l'agencement de la Figure 1.

### EXPOSÉ DÉTAILLÉ DE MODES DE RÉALISATION PRÉFÉRÉS

Comme l'illustrent les Figures, une planche de bord (1) pour un véhicule automobile, présente un côté, situé du côté du passager avant, comprenant une paroi extérieure (2) et une traverse intérieure transversale arrière (3). La paroi extérieure (2) est tournée vers l'intérieur de l'habitacle en faisant face au pare-brise avant, au pavillon et au passager avant.

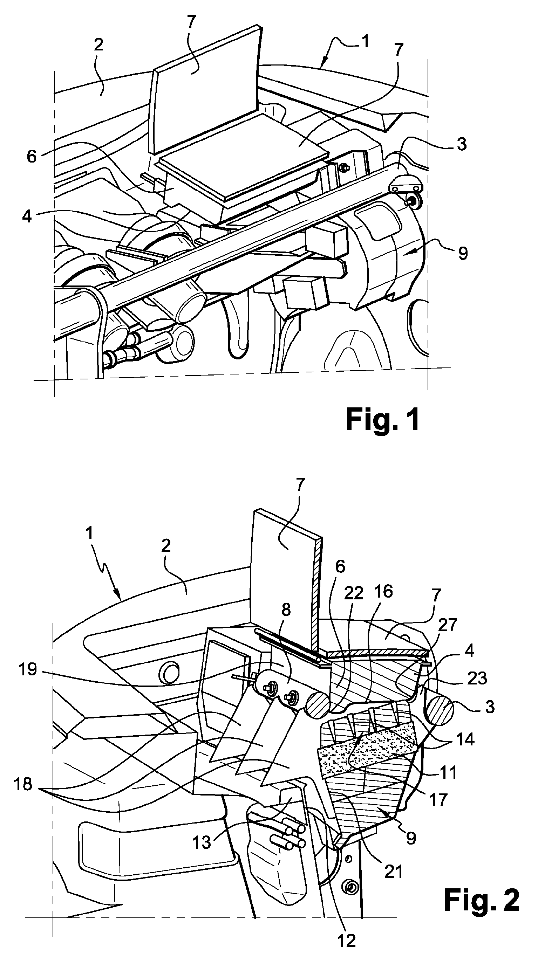

Un airbag ou dispositif de sécurité (4) est disposé dans la planche de bord (1), sous la paroi extérieure (2). Le dispositif de sécurité (4) comprend un boîtier (6) dans lequel est replié le coussin gonflable. Le boîtier (6) est refermé par un volet ou couvercle (7), qui pivote par rapport à un axe, situé au niveau de l'arête transversale supérieure avant du boîtier (6). Dans les Figures 1 et 2, le couvercle (7) est représenté dans sa position de repos et dans sa position déployée.

A titre d'exemple dans les Figures, une cartouche de gaz (8) est prévue à l'extérieur et à l'avant du boîtier (6) et au niveau de son arête transversale inférieure avant. Il est à noter que la cartouche de gaz peut également être implantée, sous le boîtier (6) et au niveau de son arête transversale inférieure avant, à l'intérieur du boîtier (6) et au niveau de son arête transversale inférieure avant, à l'arrière du boîtier (6) et au niveau de son arête transversale inférieure arrière, sous le boîtier (6) et au niveau de son arête transversale inférieure arrière, ainsi qu'à l'intérieur du boîtier (6) et au niveau de son arête transversale inférieure arrière.

Suite à un choc important intervenant contre le véhicule, des détecteurs et l'électronique associée envoie un signal électrique au dispositif de sécurité (4) qui se déclenche. La cartouche (8) fait immédiatement et instantanément gonfler le coussin. Le couvercle (7) se dégage alors vers l'avant et vers le haut, en pivotant par rapport à son axe. Le couvercle (7) constitue un plan de guidage, empêchant pour l'essentiel le coussin de partir vers le pare-brise avant et l'obligeant à se déployer au dessus de la paroi extérieure (2), vers l'arrière en direction du passager avant.

Conformément à l'invention, le dispositif de sécurité (4) est monté sur un dispositif de climatisation (9). Le dispositif ou bloc de climatisation (9) est constitué par un circuit avec un compresseur, un condenseur, un détendeur et un évaporateur (11).

D'une part, le bloc climatisation (9) est fixé, à l'avant, au niveau d'une structure de renforcement (12) appartenant à la caisse du véhicule. La structure de renforcement (12) comprend notamment une traverse transversale supérieure avant de tablier (13). D'autre part, le bloc climatisation (9) est fixé, à l'arrière, au niveau de la traverse intérieure transversale arrière (3) de la planche de bord (1).

Le dispositif de sécurité (4) prend appui sur une première série de nervures de structure (14), disposées au-dessus du bloc climatisation (9). Cette première série est formée par des nervures (14), inférieures, transversales, orientées vers le haut, et sensiblement perpendiculaires à l'évaporateur (11). Une face inférieure (16) du boîtier (6) du dispositif de sécurité (4) est maintenue contre cette première série de nervures (14), qui sont elles mêmes plaquées contre une surface supérieure (17) de l'évaporateur (11).

Le dispositif de sécurité (4) prend appui sur une deuxième série de nervures de structure (18), disposées au dessus et à l'avant du bloc climatisation (9). Cette deuxième série est formée par des nervures (18), avants, longitudinales, sensiblement verticales, orientées vers le haut, et sensiblement perpendiculaires à une face avant (19) du boîtier (6) du dispositif de sécurité (4) et à une face avant (21) de l'évaporateur (11) du bloc climatisation (9). Une arête avant (22) du boîtier (6) du dispositif de sécurité (4) et la cartouche (8) sont maintenues contre cette deuxième série de nervures (18), qui sont elles mêmes plaquées contre la structure de renforcement (12) et plus précisément sur la traverse transversale supérieure avant de tablier (13).

Le dispositif de sécurité (4) prend appui sur une troisième série de nervures de structure (23), disposées au dessus et à l'arrière du bloc climatisation (9). Il est à noter que la première série de nervures (14) est englobée par la deuxième série de nervures (18) et par la troisième série de nervures (23).

Cette troisième série est formée par des nervures (23), arrières, longitudinales, sensiblement verticales, orientées vers le haut, et sensiblement perpendiculaires à une face arrière (24) du boîtier (6) du dispositif de sécurité (4) et à une face arrière (26) de l'évaporateur (11) du bloc climatisation (9). Une arête arrière (27) du boîtier (6) du dispositif de sécurité (4) est maintenue contre cette troisième série de nervures (23), qui sont elles mêmes plaquées contre la traverse intérieure transversale arrière (3) de la planche de bord (1).

Grâce à l'invention, la force de déclenchement du dispositif de sécurité (4) est « encaissée » par le bloc climatisation (9), ce dernier étant fixé sur la traverse intérieure transversale arrière (3) de la planche de bord (1) et, le cas échéant, en appui sur la traverse transversale supérieure avant de tablier (13), suivant la position relative de cette même traverse transversale supérieure avant de tablier (13) par rapport au bloc climatisation (9).

La présente invention n'est pas limitée aux modes de réalisation décrits et illustrés. De nombreuses modifications peuvent être réalisées, sans pour autant sortir du cadre défini par la portée du jeu de revendications.

## Revendications

1. Agencement de planche de bord pour un véhicule automobile, situé du côté du passager avant, monté sur une structure d'une caisse (12) du véhicule, et comprenant :
- une paroi extérieure (2), orientée vers l'habitacle, et
- un dispositif de protection pour le passager avant à coussin d'air gonflable (4), disposé sous la paroi extérieure (2),
**caractérisé en ce que** le dispositif de protection pour le passager avant à coussin d'air gonflable (4) est monté sur un dispositif de climatisation (9) fixé sur la structure de la caisse (12) du véhicule.

2. Agencement selon la revendication 1, **caractérisé en ce que** le dispositif de protection à coussin d'air gonflable (4) est monté sur un évaporateur (11) du dispositif de climatisation (9).

3. Agencement selon la revendication 1 ou 2, **caractérisé en ce que** le dispositif de protection à coussin d'air gonflable (4) comprend un boîtier (6) prenant appui sur des nervures de structure (14, 18, 23).

4. Agencement selon la revendication 3, **caractérisé en ce que** les nervures de structure comportent une première série de nervures inférieures (14), sensiblement transversales et sensiblement perpendiculaires à une surface supérieure (17) de l'évaporateur (11) du dispositif de climatisation (9) et prenant appui sur la surface supérieure (17) dudit évaporateur (11) dudit dispositif de climatisation (9).

5. Agencement selon la revendication 4, **caractérisé en ce qu'**une surface inférieure (16) du boîtier (6) du dispositif de protection à coussin d'air gonflable (4) prend appui sur la première série de nervures inférieures (14).

6. Agencement selon la revendication 4 ou 5, **caractérisé en ce qu'**une cartouche de gonflage (8) du dispositif de protection à coussin d'air gonflable (4) prend appui sur la première série de nervures inférieures (14).

7. Agencement selon l'une quelconque des revendications 3 à 6, **caractérisé en ce que** les nervures de structure comportent une deuxième série de nervures avants (18), sensiblement longitudinales et sensiblement verticales et prenant appui sur une traverse longitudinale supérieure de tablier (13).

8. Agencement selon la revendication 7, **caractérisé en ce qu'**une cartouche de gonflage (8) du dispositif de protection à coussin d'air gonflable (4) prend appui sur la deuxième série de nervures avants (18).

9. Agencement selon l'une quelconque des revendications 3 à 8, **caractérisé en ce que** les nervures de structure comportent une troisième série de nervures arrières (23), sensiblement longitudinales et sensiblement verticales et prenant appui sur une traverse longitudinale arrière (3) de planche de bord (1).

10. Agencement selon la revendication 9, **caractérisé en ce qu'**une arête (27) du boîtier (6) du dispositif de protection à coussin d'air gonflable (4) prend appui sur la troisième série de nervures arrières (23).

11. Agencement selon la revendication 9 ou 10, **caractérisé en ce qu'**une cartouche de gonflage (8) du dispositif de protection à coussin d'air gonflable (4) prend appui sur la troisième série de nervures arrières (23).
